# NOUVEAU FASCICULE DE BREVET EUROPEEN

(11) **EP 0 723 636 B2**
(45) Date de publication et mention de la décision concernant l'opposition: **18.12.2002**
(45) Mention de la délivrance du brevet: 16.12.1998
(21) Numéro de dépôt: 95929140.2
(22) Date de dépôt: 25.08.1995
(51) Int. Cl.: F16F 15/131

(54) **AMORTISSEUR DE TORSION REFROIDI PAR CIRCULATION D'AIR**
TORSIONSSCHWINGUNGSDÄMPFER GEKÜHLT DURCH LUFTZIRKULATION
AIRFLOW-COOLED TORSION DAMPER

(30) Priorité: 29.08.1994 FR 9410375
(43) Date de publication de la demande: 31.07.1996
(73) Titulaire: VALEO, 75017 Paris (FR)
(72) Inventeur: BOCHOT, Jean-Claude, F-77410 Claye-Souilly (FR)
(74) Mandataire: Gamonal, Didier
(86) Numéro de dépôt international: FR9501124
(87) Numéro de publication internationale: WO96007037

(56) Documents cités:
- EP-A- 0 427 983
- DE-A- 3 815 505
- DE-A- 4 035 320
- DE-C- 4 127 438
- FR-A- 2 690 722
- GB-A- 2 244 543
- US-A- 5 279 182
- PATENT ABSTRACTS OF JAPAN PATENT ABSTRACTS OF JAPAN vol. 18 no. 123 (M-1568) ,28 Février 1994 vol. 18 no. 123 (M-1568) ,28 Février 1994 & JP,A,53 012053 (NISSAN MOTOR CO LTD) & JP,A,53 012053 (NISSAN MOTOR CO LTD) 22 Novembre 1993, 22 Novembre 1993,

## Description

L'invention se rapporte à un amortisseur de torsion, notamment un double volant amortisseur formant dispositif de transmission de couple pour véhicule automobile du type comportant deux masses coaxiales montées mobiles circonférentiellement l'une par rapport à l'autre à l'encontre de moyens élastiques à action circonférentielle; l'invention concerne plus particulièrement un perfectionnement d'un tel dispositif permettant d'obtenir une circulation forcée d'air entre des parties des deux masses coaxiales et d'assurer ainsi son refroidissement.

On connaît un amortisseur de torsion du genre défini ci-dessus comportant une première masse munie d'un premier plateau destiné à être fixé à un arbre menant, tel que par exemple le vilebrequin du moteur d'un véhicule automobile, et une deuxième masse comportant un deuxième plateau, annulaire, et un disque fixé à celui-ci, en regard de ladite première masse et conformé pour former un voile d'actionnement des moyens élastiques à action circonférentielle agencés entre les deux masses. La première masse est conformée avec un moyeu muni d'un palier de rotation, généralement un roulement à billes sur lequel est montée ladite seconde masse. Cette dernièreforme un plateau susceptible de constituer le plateau de réaction d'un embrayage à friction monté dans le prolongement axial de l'amortisseur de torsion. L'embrayage permet de coupler sélectivement la deuxième masse de cet amortisseur de torsion à un arbre mené, tel que par exemple l'arbre d'entrée d'une boîte de vitesses.

Un tel dispositif est par exemple décrit dans le document FR 2 662 760 (GB-A-2 244 543). En outre, dans un tel système connu, le palier est situé sur un diamètre plus petit que le diamètre de répartition des trous des vis de fixation de ladite première masse sur l'arbre menant. La seconde masse présente des trous de passage en coïncidence avec les trous de vissage.

L'invention concerne un perfectionnement applicable notamment au type d'amortisseur de torsion connu de FR-A-2 662 760 et décrit ci-dessus, permettant d'assurer un refroidissement efficace de celui-ci, par circulation forcée d'air s'écoulant radialement vers l'extérieur entre certains éléments du dispositif.

Plus précisément l'invention conceme un amortisseur de torsion, notamment pour véhicule automobile, comportant deux masses coaxiales montées mobiles circonférentiellement l'une par rapport à l'autre à l'encontre de moyens élastiques à action circonférentielle, respectivement une première masse comportant un premier plateau destiné à être fixé à un arbre menant et une deuxième masse comportant un deuxième plateau annulaire, destiné à former le plateau de réaction d'un embrayage en offrant une face de friction au disque de friction que comporte ledit embrayage, et un disque fixé à celui-ci en regard de ladite première masse à l'aide de rivets ou de moyens de fixation analogues, implantés radialement au niveau de la face de friction du deuxième plateau ce disque formant un voile d'actionnement desdits moyens élastiques, dans lequel ladite première masse est conformée avec un moyeu muni d'un palier de rotation de ladite deuxième masse, et dans lequel un moyen d'entretoisement axial est interposé entre le deuxième plateau et le disque formant voile autour de chaque rivet ou moyens de fixation analogues, caractérisé en ce que le disque formant voile est en tôle emboutie et se prolonge radialement vers l'intérieur par un manchon cylindrique, en ce que ledit palier est installé entre ledit manchon cylindrique et ledit moyeu et en ce qu'un espace annulaire de ventilation est ménagé d'une part entre ledit deuxième plateau et ledit disque formant voile dans sa partie radialement la plus interne et d'autre part entre ledit deuxième plateau et ladite première masse dans sa partie radialement la plus externe.

Grâce à l'invention, on refroidit bien le deuxième plateau formant usuellement le plateau de réaction d'un embrayage à friction. Le palier est ainsi refroidi, moins de chaleur lui étant transmise.

En outre le deuxième plateau est simplifié et le disque assure plusieurs fonctions de manière simple et économique.

La disposition selon l'invention permet d'implanter des moyens de frottement à sec entre la première masse et le disque formant voile d'entraînement. Ce disque a une forme tortueuse pour réduire l'encombrement.

L'invention s'applique avantageusement à un amortisseur de torsion du type défini ci-dessus dans lequel ladite première masse comprend un disque fixé à la périphérie externe du premier plateau et s'étendant radialement vers l'intérieur pour définir avec ce plateau un logement annulaire abritant lesdits moyens élastiques.

Le voile de la deuxième masse est conformé pour s'engager dans ce logement annulaire et celui-ci est refermé de façon étanche grâce à des rondelles élastiques d'étanchéité, l'une étant montée entre le premier plateau et le voile et l'autre étant montée entre le voile et le disque fixé à la périphérie externe dudit premier plateau. Un tel logement annulaire étanche est partiellement rempli de graisse pour lubrifier les ressorts des moyens élastiques à action circonférentielle précités. Le deuxième plateau étant refroidi, la graisse s'échauffera moins.

Dans un tel mode de réalisation, la partie radialement la plus externe de l'espace annulaire de ventilation est définie entre le disque de ladite première masse et ledit deuxième plateau. Ce dernier peut comporter avantageusement des échancrures à sa périphérie interne, conformées pour forcer la circulation d'air dans ledit passage annulaire de ventilation, radialement vers l'extérieur de celui-ci. L'assemblage entre ledit deuxième plateau et son disque formant voile est réalisé par des rivets ou moyens de fixation analogues et, dans ce cas, pour maintenir la continuité de l'espace annulaire de ventilation, on prévoit, autour de chaque rivet, un moyen d'entretoisement axial interposé entre ledit deuxième plateau et son disque. Ce moyen d'entretoisement peut être constitué par un bossage du disque formant voile, réalisé par emboutissage, autour du trou pratiqué dans le disque pour le passage du rivet correspondant.

L'invention sera mieux comprise et d'autres avantages de celle-ci apparaîtront plus clairement à la lumière de la description qui va suivre d'un amortisseur de torsion formant transmetteur de couple conforme à son principe, donnée uniquement à titre d'exemple et faite en référence au dessin annexé dans lequel :
- la figure unique est une demi-coupe axiale d'un double volant amortisseur conforme à l'invention.

Sur le dessin, on a représenté un dispositif formant double volant amortisseur 11 pour véhicule automobile comportant deux masses coaxiales 12, 14 montées mobiles circonférentiellement l'une par rapport à l'autre autour d'un axe de rotation commun XX à l'encontre de moyens élastiques d'amortissement 15, à action circonférentielle, constitués par plusieurs ensembles de ressorts hélicoïdaux répartis régulièrement circonférentiellement.

Dans l'exemple, chaque ensemble comporte deux ressorts hélicoïdaux 16, 17 de diamètres et raideurs différents, les diamètres étant tels que le ressort 17 se trouve logé à l'intérieur du ressort 16. L'axe XX est aussi l'axe de rotation d'un arbre menant 19, ici le vilebrequin d'un moteur à combustion interne, d'un embrayage à friction dont on a représenté le disque de friction 20 et d'un arbre d'entrée d'une boîte de vitesses non représenté. La première masse tournante 12 est connectée à l'arbre menant 19 par des vis 22 situées au voisinage de sa périphérie interne. Elle comporte un plateau, en fonte, ci-après désigné premier plateau 23. La deuxième masse tournante 14 est couplée de manière débrayable, par l'intermédiaire d'un mécanisme d'embrayage et du disque de friction 20, à un arbre mené ici l'arbre d'entrée de la boîte de vitesses. La deuxième masse 14 est montée à rotation sur un moyeu tubulaire central 24 de la première masse par l'intermédiaire d'un palier de rotation 26 constitué ici d'un roulement à billes. La deuxième masse 14 comporte un plateau ci-après désigné deuxième plateau 27, annulaire, et un disque 28 fixé à celui-ci en regard de ladite première masse. Le plateau 27 forme, de manière connue en soi, le plateau de réaction d'un embrayage à friction et offre une face de friction à la garniture de friction concernée du disque 20. Le disque 28 forme un voile d'actionnement desdits moyens élastiques.

Il comporte des pattes 28a à sa périphérie externe, qui sont adaptées à solliciter les ressorts par des extrémités de ceux-ci, lors d'une rotation relative entre lesdites première et deuxième masses. A leurs autres extrémités, les ressorts prennent appui sur des butées, non représentées, solidaires de ladite première masse. Ledit premier plateau 23, comporte une partie annulaire radiale 23a prolongée à sa périphérie externe par une jupe cylindrique axiale 23b à l'extrémité libre de laquelle est fixé, par des vis 30, un disque 32 en tôle emboutie. A sa périphérie interne, la partie 23a est prolongée par le moyeu 24 d'un seul tenant avec celle-ci.

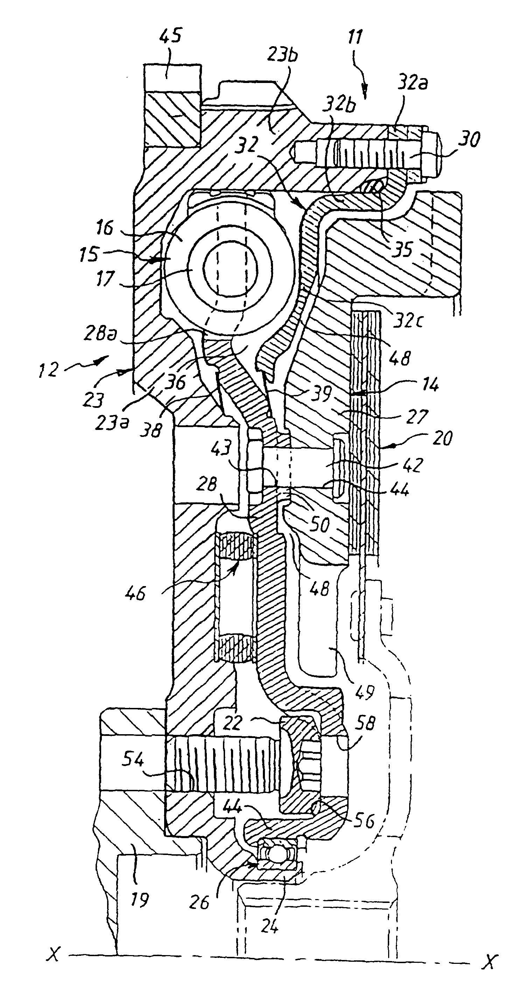

Comme cela est visible sur le dessin, le disque 32, qui est fixé à la périphérie externe du premier plateau 23, comporte, de l'extérieur vers l'intérieur, une partie annulaire radiale 32a appliquée contre l'extrémité de la jupe 23b en fonte, une partie cylindrique 32b s'étendant le long de la face intérieure de la jupe et une partie sensiblement radiale 32c s'étendant vers l'intérieur pour définir, avec la partie annulaire 23a du premier plateau et ladite jupe 23b, la plus grande partie d'un logement annulaire 36 abritant les moyens élastiques 15 ainsi que les pattes 28a du disque 28. La partie 32c est emboutie localement pour appui des extrémités des ressorts 16, 17, la partie 23a présentant en regard desdits emboutis et des pattes 28a des bossages, par exemple sous forme de pièces rapportées, pour appui des extrémités circonférentielles des ressorts 16, 17. Lesdits emboutis et lesdits bossages étant visibles par exemple dans le document WO-A-95/17617 (figure 1) auquel on pourra se reporter. Le logement annulaire 36 est fermé de façon étanche, radialement vers l'intérieur par deux rondelles d'étanchéité 38, 39 comprimées axialement entre le disque 28 formant voile et des éléments de ladite première masse 12. Plus particulièrement, une rondelle 38 est montée avec compression axiale entre une portée conique du premier plateau 23 et un décrochement annulaire du disque 28 formant voile et une rondelle 39 est montée, avec compression axiale, entre un décrochement annulaire du disque 28 formant voile, sur l'autre face de celui-ci et un décrochement annulaire ménagé au bord circulaire interne du disque 32 de ladite première masse. Un joint d'étanchéité annulaire 35 est inséré entre l'extrémité de la jupe 23b et le disque 32 fixé à celle-ci. Grâce à ce montage étanche, on peut remplir partiellement le logement annulaire 36 de graisse, pour lubrifier les ressorts des moyens élastiques à action circonférentielle.

La fixation du disque 28 formant voile audit deuxième plateau 27 est assurée par des rivets 42 répartis régulièrement circonférentiellement et engagés dans des trous 43 du disque et des trous 44 du deuxième plateau 27.

Comme représenté, celui-ci forme le plateau de réaction du disque de friction 20.

Ici les rivets 42 sont implantés radialement au niveau de la face de friction qu'offre le deuxième plateau 27 à la garniture de friction 20 concernée du disque de friction.

Une couronne crantée, dite couronne de démarrage 45, prévue pour être entraînée par un démarreur non représenté, est fixée à la périphérie externe de la première masse, au niveau de la jonction entre ledit premier plateau 23a et la jupe 23b qui le prolonge extérieurement.

Bien entendu, la première masse présente des trous (non référencés) en coïncidence avec les trous 44 pour permettre la fixation du disque 28.

Selon une caractéristique remarquable de l'invention, le disque 28 formant voile, en tôle emboutie, se prolonge radialement vers l'intérieur bien en deçà des rivets 42 par lesquels il est solidarisé audit deuxième plateau 27, de sorte que le palier de rotation 26 (le roulement à billes mentionné ci-dessus) est en fait installé entre le moyeu 24 dudit premier plateau appartenant à la première masse et un manchon cylindrique 44 que présente le disque 28 formant voile à sa périphérie interne. Le manchon 44 entoure l'extrémité libre du moyeu 24. Ce manchon 44 est épaulé et présente une gorge servant au montage d'un circlips pour immobiliser la bague externe du roulement 26.

De même le moyeu 24 est épaulé et est serti à son extrémité libre pour immobiliser la bague interne du roulement 26.

En outre, un espace annulaire de ventilation 48 est ménagé d'une part entre ledit deuxième plateau 27 appartenant à ladite deuxième masse 14 et ledit disque 28 formant voile, dans sa partie radialement la plus interne et, d'autre part, entre ce même deuxième plateau 27 et ladite première masse 12 dans sa partie radialement la plus externe. Plus précisément, dans le type particulier d'amortisseur de torsion qui est décrit, comportant un logement annulaire étanche 36 abritant les moyens élastiques, la partie radialement la plus externe de l'espace annulaire de ventilation 48 est définie entre le disque 32 de ladite première masse et ledit deuxième plateau 27. Il apparaît aussi que la rondelle 39 permet d'isoler l'espace annulaire de ventilation 48 du logement annulaire 36. En outrer ledit deuxième plateau 27 comporte des échancrures 49 à sa périphérie interne qui sont conformées pour créer une circulation d'air dans l'espace annulaire de ventilation 48, radialement vers l'extérieur de celui-ci. Les échancrures 49 s'étendent radialement en dessous des garnitures de frottement du disque 20, c'est-à-dire en dessous de la face de friction du plateau 27. Pour maintenir la continuité de l'espace annulaire de ventilation de l'intérieur vers l'extérieur, un moyen d'entretoisement axial est interposé entre ledit deuxième plateau 27 et son disque 28, autour de chaque rivet 42. Ces moyens d'entretoisement axial s'étendent, ainsi que les rivets 42, radialement en-dessous des rondelles d'étanchéité 38, 39 et du logement 36, les rivets 42 ou des moyens de fixation analogues étant implantés globalement en dessous du diamètre moyen des garnitures de friction du disque 20.

Dans l'exemple, ce moyen d'entretoisement est constitué par un bossage 50 du disque 28 formant voile de ladite deuxième masse. Ce bossage est formé par emboutissage autour du trou 43 pratiqué pour le passage du rivet 42 correspondant. En variante, le bossage peut être venu de moulage avec le plateau de réaction 27. Dans une autre variante, l'entretoise peut être une pièce indépendante, par exemple une rondelle thermiquement isolante montée sur le rivet et permettant d'abaisser encore la température au niveau du roulement 26 et de la cavité 36.

D'autre part, des moyens de frottement sec 46 sont interposés entre ledit premier plateau 23 appartenant à ladite première masse et ledit disque 28 formant voile.

Un tel agencement est décrit dans le document FR 2 687 749.

En variante les moyens de frottement peuvent être du type de ceux décrits dans le document WO-A-95/17617 précité et comporter une rondelle de frottement collée sur une rondelle d'application à pattes axiales pénétrantes, ainsi qu'une rondelle élastique, par exemple du type Belleville.

Enfin, il est à noter que les vis de montage 22 de l'amortisseur de torsion sont engagées dans des trous 54 du premier plateau appartenant à ladite première masse, mais qu'elles sont retenues captives entre ce premier plateau 23 et le disque 28 formant voile de ladite deuxième masse, dans une zone comprise radialement entre le palier et la périphérie interne du deuxième plateau 27.

Pour ce faire, ledit disque 28 formant voile comporte des zones embouties 56 permettant d'accueillir les têtes de vis 22. Ces zones comportent des trous 58 en regard des emplacements des têtes de vis (lorsque les deux masses ne sont pas sollicitées en rotation l'une par rapport à l'autre) par lesquels on peut introduire un outil pour la fixation du volant amortisseur au vilebrequin, le palier de rotation 26 étant situé sur un diamètre inférieur à celui des vis 22, les trous 58 étant en coïncidence axiale avec les trous de vissages 54 des vis 22.

On notera que le disque 20 présente un moyeu pénétrant dans le manchon 24. Le moyeu est cannelé intérieurement pour liaison en rotation avec l'arbre d'entrée de la boîte de vitesses précité. Le moyeu est prolongé d'un seul tenant par un voile doté d'une pluralité de trous en coïncidence avec les trous 54, 58. A sa périphérie exteme, ce voile est prolongé par un disque de support, fixé par rivetage sur le voile et portant à fixation sur chacune de ses faces des garnitures de friction propres, de manière connue en soi, à être serrées de manière débrayable entre le plateau de réaction 27 et un plateau de pression (non visible) appartenant au mécanisme d'embrayage (non visible) rapporté par son couvercle sur le plateau 27 qui peut atteindre des températures non négligeables. Le voile du disque 20 peut présenter des ailettes pour améliorer la ventilation.

Lorsque l'ensemble du volant amortisseur est entraîné en rotation, il apparaît clairement à la lumière de la description qui précède, qu'une circulation d'air forcé est créée, radialement de l'intérieur vers l'extérieur, dans l'espace annulaire de ventilation 48 défini ci-dessus. Cette circulation d'air permet un refroidissement efficace des éléments du volant amortisseur de torsion, notamment du plateau de réaction 27.

On notera que les zones embouties 56 et les trous 58 favorisent également la ventilation. Bien entendu, la présente invention n'est pas limitée à l'exemple de réalisation décrit.

Par exemple, les rivets 42 peuvent être remplacés par des vis ou des rivets creux engagés dans un trou borgne pratiqué dans le plateau de réaction 27 comme divulgué à la figure 1 du document FR-A-26 62 760.

En variante il peut s'agir de pions avec une tête engagés dans des trous borgnes du plateau de réaction 27 dont la face de friction est alors continue.

Ainsi le disque 28 formant voile est fixé au plateau de réaction 27 par des rivets 42 ou des moyens de fixation analogues.

Enfin le palier 26 peut être un palier lisse ou un roulement à deux rangées de billes.

On appréciera que le disque 28 a une forme tortueuse. Ce disque 28 présente au-dessus des bossages 50 une zone inclinée permettant de mettre sous précontrainte les rondelles d'étanchéité 38, 39 et de décaler axialement les ressorts 16, 17, afin de réduire l'encombrement axial de l'amortisseur de torsion.

Les zones embouties 56 et les pattes 28a s'étendent axialement de part et d'autre des bossages 50. Le plateau de réaction 27 peut être ainsi simplifié. Bien entendu, les échancrures 49 s'étendent radialement au dessus des zones embouties 56 en étant ici dans l'alignement radial desdites zones 56.

## Revendications

1. Amortisseur de torsion, notamment pour véhicule automobile, comportant deux masses coaxiales (12, 14) montées mobiles circonférentiellement l'une par rapport à l'autre à l'encontre de moyens élastiques (16, 17) à action circonférentielle, respectivement une première masse (12) comportant un premier plateau (23) destiné à être fixé à un arbre menant et une deuxième masse (14) comportant un deuxième plateau annulaire (27), destiné à former le plateau de réaction d'un embrayage en offrant une face de friction au disque de friction que comporte ledit embrayage, et un disque (28) fixé à celui-ci en regard de ladite première masse à l'aide de rivets (42) ou de moyens de fixation analogues, implantés radialement au niveau de la face de friction du deuxième plateau (27) ce disque (28) formant un voile d'actionnement desdits moyens élastiques, dans lequel ladite première masse (12) est conformée avec un moyeu (24) muni d'un palier de rotation (26) de ladite deuxième masse, et dans lequel un moyen d'entretoisement axial (50) est interposé entre le deuxième plateau (27) et le disque (28) formant voile autour de chaque rivet (42) ou moyens de fixation analogues, **caractérisé en ce que** le disque (28) formant voile est en tôle emboutie et se prolonge radialement vers l'intérieur par un manchon cylindrique (44), **en ce que** ledit palier (26) est installé entre ledit manchon cylindrique (44) et ledit moyeu (24) et **en ce qu'**un espace annulaire de ventilation (48) est ménagé d'une part entre ledit deuxième plateau (27) et ledit disque (28) formant voile dans sa partie radialement la plus interne et d'autre part entre ledit deuxième plateau (27) et ladite première masse (12) dans sa partie radialement la plus externe.

2. Amortisseur de torsion selon la revendication 1, **caractérisé en ce que** ladite première masse (12) comprend un disque (32) fixé à la périphérie externe dudit premier plateau (23) et s'étendant radialement vers l'intérieur pour définir avec lui un logement annulaire (36) abritant lesdits moyens élastiques (15) et **en ce que** ladite partie radialement la plus externe dudit espace annulaire de ventilation (48) est définie entre le disque (32) de ladite première masse et ledit deuxième plateau (27).

3. Amortisseur de torsion selon la revendication 1 ou 2, **caractérisé en ce que** ledit deuxième plateau (27) comporte des échancrures (49) à sa périphérie interne.

4. Amortisseur de torsion selon la revendication 3, **caractérisé en ce que** le logement annulaire (36) est fermé de façon étanche radialement vers l'intérieur par une rondelle (39) permettant d'isoler l'espace annulaire de ventilation (48) du logement annulaire (36).

5. Amortisseur de torsion selon la revendication 1, **caractérisé en ce que** chaque moyen d'entretoisement précité est constitué par un bossage (50) dudit disque (28) de ladite deuxième masse, défini autour du trou pratiqué dans ledit disque (28) pour le passage du rivet (42) correspondant.

6. Amortisseur de torsion selon la revendication 1, **caractérisé en ce que** chaque moyen d'entretoisement précité comporte une rondelle en matériau thermiquement isolant.

7. Amortisseur de torsion selon la revendication 1, **caractérisé en ce que** des vis de montage (22) sont engagées dans des trous (54) dudit premier plateau, **en ce qu'**elles sont retenues captives entre ledit premier plateau et ledit disque (28) de ladite deuxième masse dans une zone comprise radialement entre ledit palier et la périphérie interne dudit deuxième plateau, et **en ce que** des trous (58) sont pratiqués dans ledit disque en regard des emplacements des têtes desdites vis.

## Patentansprüche

1. Torsionsschwingungsdämpfer, insbesondere für Kraftfahrzeuge, umfassend zwei koaxiale Massen (12, 14), die in Umfangsrichtung im Verhältnis zueinander beweglich entgegen umfangsmäßig wirksamen elastischen Mitteln (16, 17) gelagert sind, und zwar eine erste Masse (12), umfassend eine erste Platte (23) zur Befestigung an einer treibenden Welle, und eine zweite Masse (14), umfassend eine ringförmige zweite Platte (27), die dazu bestimmt ist, die Gegenanpreßplatte einer Kupplung zu bilden, wobei sie eine Reibfläche für die Reibungskupplungsscheibe aufweist, die zu der besagten Kupplung gehört, und eine Scheibe (28), die an dieser gegenüber der besagten ersten Masse anhand von auf radialer Höhe der Reibfläche der zweiten Platte (27) eingebauten Nieten (42) oder ähnlichen Befestigungsmitteln befestigt ist, wobei diese Scheibe (28) einen Betätigungsflansch für die besagten elastischen Mittel bildet, wobei die besagte erste Masse (12) mit einer Nabe (24) gestaltet ist, die mit einem Drehlager (26) für die besagte zweite Masse versehen ist, und wobei ein axiales Verstrebungsmittel (50) zwischen der besagten zweiten Platte (27) und der als Flansch ausgebildeten Scheibe (28) um jeden Niet (42) oder ähnliche Befestigungsmittel herum eingefügt ist, **dadurch gekennzeichnet, daß** die als Flansch ausgebildete Scheibe (28) aus tiefgezogenem Blech ausgeführt ist und radial nach innen durch eine zylindrische Muffe (44) verlängert wird, daß das besagte Lager (26) zwischen der besagten zylindrischen Muffe (44) und der besagten Nabe (24) eingebaut ist und daß ein ringförmiger Belüftungsraum (48) einerseits zwischen der besagten zweiten Platte (27) und der besagten als Flansch ausgebildeten Scheibe (28) in ihrem radial am weitesten innen liegenden Teil und andererseits zwischen der besagten zweiten Platte (27) und der besagten ersten Masse (12) in ihrem radial am weitesten außen liegenden Teil vorgesehen ist.

2. Torsionsschwingungsdämpfer nach Anspruch 1 , **dadurch gekennzeichnet, daß** die besagte erste Masse (12) eine Scheibe (32) umfaßt, die am äußeren Umfang der besagten ersten Platte (23) befestigt ist und sich radial nach innen erstreckt, um zusammen mit ihr eine ringförmige Aufnahme (36) zu begrenzen, die die besagten elastischen Mittel (15) enthält, und daß der besagte radial am weitesten außen liegende Teil des besagten ringförmigen Belüftungsraums (48) zwischen der Scheibe (32) der besagten ersten Masse und der besagten zweiten Platte (27) ausgebildet ist.

3. Torsionsschwingungsdämpfer nach Anspruch 1 oder 2, **dadurch gekennzeichnet, daß** die besagte zweite Platte (27) Aussparungen (49) an ihrem inneren Umfang umfaßt.

4. Torsionsschwingungsdämpfer nach Anspruch 3 , **dadurch gekennzeichnet, daß** die ringförmige Aufnahme (36) durch eine Dichtungsscheibe (39) radial nach innen dicht verschlossen ist, die eine Abtrennung des ringförmigen Belüftungsraums (48) von der ringförmigen Aufnahme (36) ermöglicht.

5. Torsionsschwingungsdämpfer nach Anspruch 1 , **dadurch gekennzeichnet, daß** jedes vorgenannte Verstrebungsmittel aus einem Vorsprung (50) der besagten Scheibe (28) der besagten zweiten Masse besteht, die um das Loch herum ausgebildet ist, das in die besagte Scheibe (28) für den Durchgang des entsprechenden Niets (42) eingearbeitet ist.

6. Torsionsschwingungsdämpfer nach Anspruch 1 , **dadurch gekennzeichnet, daß** jedes vorgenannte Verstrebungsmittel eine Scheibe aus einem thermisch isolierenden Werkstoff umfaßt.

7. Torsionsschwingungsdämpfer nach Anspruch 1 , **dadurch gekennzeichnet, daß** Montageschrauben (22) in Löcher (54) der besagten ersten Platte eingesetzt sind, daß sie zwischen der besagten ersten Platte und der besagten Scheibe (28) der besagten zweiten Masse in einem Bereich festgehalten werden, der radial zwischen dem besagten Lager und dem inneren Umfang der besagten zweiten Platte enthalten ist, und daß Löcher (58) in die besagte Scheibe gegenüber den Anbringungsstellen der Köpfe der besagten Schrauben eingearbeitet sind.

## Claims

1. A torsion damper, especially for a motor vehicle, comprising two coaxial masses (12, 14) mounted for circumferential movement of one with respect to the other against the action of circumferentially acting resilient means (16, 17), namely, respectively, a first mass (12) comprising a first platen (23) adapted to be fixed to a driving shaft, and a second mass (14) comprising an annular second platen (27) adapted to constitute the reaction plate of a clutch and offering a friction surface to the clutch friction wheel comprised in the said clutch, and a disc (28) fixed to the latter in facing relationship with the said first mass by means of rivets (42) or analogous fastening means inserted radially at the level of the friction face of the second platen (27), the said disc (28) constituting a damper plate for actuation of the said resilient means, wherein the said first mass (12) is configured with a hub (24) which is equipped with a bearing (26) for rotation of the said second mass, and wherein an axial spacing means (50) is interposed between the second platen (27) and the damper plate (28) around each rivet (42) or analogous fastening means, **characterised in that** the damper plate (28) is of press-formed metal plate and is extended radially inwardly by a cylindrical sleeve (44), **in that** the said bearing (26) is fitted between the said cylindrical sleeve (44) and the said hub (24), and **in that** an annular ventilation space (48) is defined, firstly between the said second platen (27) and the said damper plate (28) in its radially innermost part, and secondly, between the said second platen (27) and the said first mass (12) in its radially outermost part.

2. A torsion damper according to Claim 1, **characterised in that** the said first mass (12) comprises a disc (32) fixed to the outer periphery of the said first platen (23) and extending radially inwardly so as to define with it an annular chamber (36) enclosing the said resilient means (15), and **in that** the said radially outermost part of the said annular ventilation space (48) is defined between the disc (32) of the said first mass and the second platen (27).

3. A torsion damper according to Claim 1 or Claim 2, **characterised in that** the said second platen (27) has slots (49) at its inner periphery.

4. A torsion damper according to Claim 3, **characterised in that** the annular chamber (36) is sealingly closed on its radially inward side by a ring (39) which isolates the annular ventilation space (48) from the annular chamber (36).

5. A torsion damper according to Claim 1, **characterised in that** each said spacing means comprises a boss (50) of the said disc (28) of the said second mass, defined around the hole formed in the said disc (28) for passage of the corresponding rivet (42).

6. A torsion damper according to Claim 1, **characterised in that** each said spacing means comprises a ring of thermally insulating material.

7. A torsion damper according to Claim 1, **characterised in that** screw fasteners (22) are engaged in holes (54) in the said first platen, **in that** they are held captive between the said first platen and the said disc (28) of the said second mass, in a zone lying radially between the said bearing and the inner periphery of the said second platen, and **in that** holes (58) are formed in the said disc in facing relationship with seatings for the heads of the said screw fasteners.
